Europäisches Patentamt

European Patent Office

Office européen des brevets

(19)

(11) Numéro de publication: **0 023 278**
**B1**

(12) **FASCICULE DE BREVET EUROPEEN**

(45) Date de publication du fascicule du brevet: **11.07.84**

(51) Int. Cl.³: **B 41 J 11/30**

(21) Numéro de dépôt: **80103731.8**

(22) Date de dépôt: **01.07.80**

(54) Dispositif d'entraînement d'un support en forme de bande perforée.

(30) Priorité: **25.07.79 US 60550**

(43) Date de publication de la demande:
**04.02.81 Bulletin 81/5**

(45) Mention de la délivrance du brevet:
**11.07.84 Bulletin 84/28**

(84) Etats contractants désignés:
**DE FR GB**

(56) Documents cités:
**FR - A - 2 307 657**
**US - A - 2 179 156**
**US - A - 3 825 162**
**US - A - 3 917 048**

(73) Titulaire: **International Business Machines
Corporation
Old Orchard Road
Armonk, N.Y. 10504 (US)**

(72) Inventeur: **Blaskovic, Silvio, Ugo
1120 Highland Beach Drive
Highland Beach Florida 33431 (US)**
Inventeur: **Cornell, Robert Wilson
555 NW 16th Avenue
Boca Raton Florida 33432 (US)**

(74) Mandataire: **Bonin, Jean-Jacques
Compagnie IBM France Département de Propriété
Industrielle
F-06610 La Gaude (FR)**

Courier Press, Leamington Spa, England.

## Description

### Domaine technique

La présente invention concerne un dispositif d'entraînement d'un support en forme de bande perforée et plus particulièrement, un dispositif d'alimentation pour déplacer un milieu d'enregistrement, par exemple du papier, présentant des perforations marginales, dans une imprimante ou autre machine similaire.

### Etat de la technique antérieure

On utilise depuis de nombreuses années des dispositifs d'entraînement pour entraîner du papier dans des imprimantes out autre machine similaire. Le papier utilisé est du papier en bande classique pour claculateur qui présente des perforations dans ses deux marges. Deux dispositifs d'entraînement sont montés en un endroit approprié dans la partie de l'imprimante assurant la manipulation du papier et les picots des disposits d'entraînement engrènent avec les perforations du papier. Le mouvement des picots provoque l'entraînement du papier vers l'avant dans l'imprimante. En général, les picots d'entraînement sont agencés en boucle sans fin et des moyens sont prévus pour entraîner la boucle sans fin en rotation, c'est-à-dire pour entraîner les picots. Les picots se présentent couramment sous la forme de parties de maillons pouvant être assemblés pour forme une chaîne ou peuvent être disposés dans des trous ménagés à cet effet dans une courroie métallique ou en plastique mince.

Les dispositifs d'entraînement de l'art antérieur, tels que par exemple ceux décrits dans US—A—3917048 et FR—A—2307657 comportent une porte montée à pivots sur leur boîtier de façon qu'après l'introduction du papier, la porte pivote et se place dans une position pratiquement parallèle au papier, mais au-dessus de celui-ci. Cette porte en position fermée interdit donc le dégagement du papier des picots d'entraînement du dispositif d'entraînement. La porte doit pouvoir également pivoter en position ouverte pour permettre l'engagement initial du papier sur les picots d'entraînement.

L'un des problèmes principaux rencontrés dans les dispositifs d'entraînement de l'art antérieur concerne les moyens utilisés pour maintenir la porte du dispositif à une distance acceptable au-dessus du plan du papier. Dans ces dispositifs de l'art antérieur, la porte est maintenue grâce à son montage à pivots qui permet sa rotation, et à l'installation d'une butée ou languette contre laquelle elle vient buter en position fermée. En raison du fait que la butée est disposée au voisinage de l'axe de pivotement de la porte, des contraintes considérables s'exercent sur les pivots ou, sur la butée lorsque celle-ci se présente sous la forme d'une languette. Dans le premier cas, les pivots sont susceptibles, de se briser après un certain temps d'utilisation et dans le deuxième cas, les languettes sont susceptibles de se déformer et ainsi, de ne plus assurer le maintien de la porte en position fermée à la distance appropriée au-dessus du papier.

Un autre problème réside dans le fait que le montage à pivots des portes sur les boîtiers des disposits d'entraînement tel que pratiqué dans l'art antérieur, implique des dispositifs d'entraînement droit et gauche différents ou l'installation d'une porte de chaque côté du dispositif d'entraînement de façon que celui-ci puisse être utilisé à la fois pour les montages à droite et pour les montages à gauche. En outre, la fixation de la porte au boîtier du dispositif entraîne des coûts de fabrication relativement élevés. Il est préférable d'avoir une seule porte sur le dispositif d'entraînement, qui pourrait être facilement montée des deux côtés du boîtier ou, si nécessaire, facilement retirée d'un côté et montée de l'autre côté pour permettre au boîtier d'être utilisé aussi bien pour un dispositif dentraînement droit que pour un dispositif d'entraînement gauche.

### Exposé de l'invention

Le dispositif d'entraînement de la présente invention est du type générale mentionné plus haut, mais il permet de remédier aux inconvénients de l'art antérieur grâce à la combinaison des caractéristiques suivantes:

la butée est de forme allongée et s'étend longitudinalement sensiblement sur toute la longueur de la porte, parallèlement à l'axe de pivotement de la porte à une disstance suffisante de cet axe pour diminuer le moment dû au porte-à-faux de l'extrémité de la porte lorsque celle-ci est basculée en position fermée et qu'elle vient en butée contre une partie de la surface de support du boîtier du dispositif et les moyens de rappel de la porte sont conçus et montés de façon que la force de rappel qu'ils exercent sur la porte lorsque celle-ci est fermée prenne appui sur le même axe que celui de la butée.

Ces caractéristiques ont pour effet de diminuer les efforts de cisaillement sur les axes de rotation de la porte, et d'éviter tout effort tendant à voiler la porte, aussi bien dans le sens longitudinal (grâce à la forme allongée de la butée) que dans le sens transversal (grâce à la position du point d'appui des moyens de rappel sur la porte).

Ces avantages ont pour conséquence de permettre le montage de l'un des axes de la porte dans un gond "ouvert", sans risque de déboîtement. La présence de ce gond "ouvert" permet évidemment un montage particulièrement aisé de la porte. Il en résulte qu'on n'a pas besoin de monter deux portes à demeure sur le boîtier (comme c'est le cas par exemple dans la demande FR—A—2307657), puisqu'on peut très facilement démonter la porte et la remonter sur l'autre face du boîtier, si nécessaire. On économise ainsi une porte par boîtier.

D'autres caractéristiques et avantages de la présente invention ressortiront mieux de l'exposé qui suit, fait en référence aux dessins annexés à ce texte et qui représentent un mode de réalisation préféré de celle-ci.

Brève description des figures

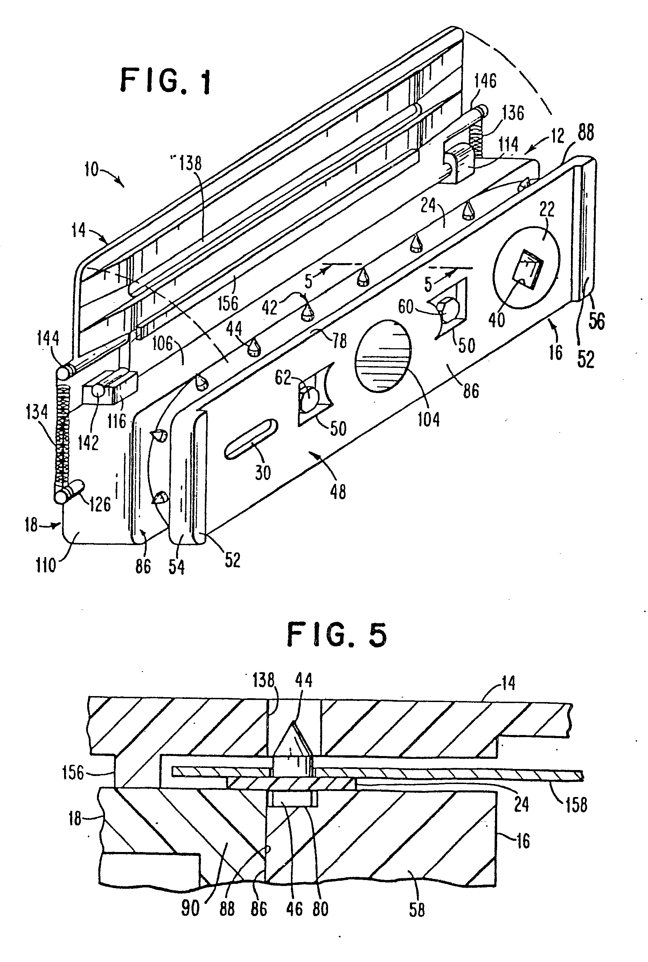

La Figure 1 est une vue en perspective du dispositif d'entraînement de support d'enregistrement de la présente invention.

La Figure 2 est une vue éclatée des divers éléments composant le dispositif d'entraînement de la Figure 1.

La Figure 3 est une vue d'extrémité du dispositif de la Figure 1.

La Figure 4 est une vue de côté de la porte représentée à la Figure 1, et

La Figure 5 est une vue en coupe prise selon les lignes V—V de la Figure 1, la porte étant en position fermée et le milieu d'enregistrement introduit dans le dispositif.

Description d'un mode de réalisation de l'invention

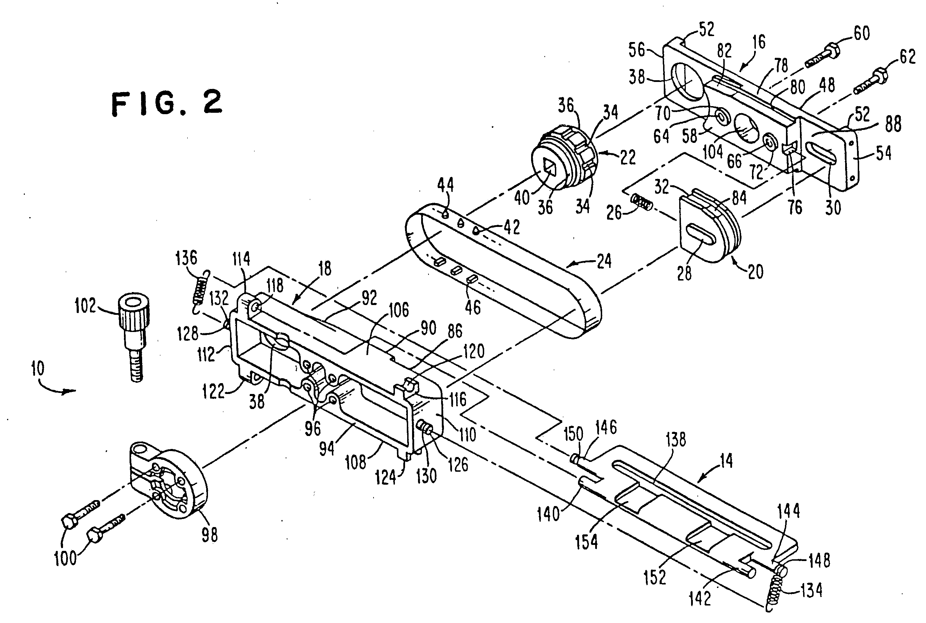

Le dispositif d'entraînement 10 sera maintenant décrit en se reportant aux figures. Il comprend deux parties principales: le boîtier 12 et la porte 14. Le boîtier 12 présente un flasque intérieur 16 et un châssis ou cadre extérieure 18. Un tendeur à ressort 20, une roue crantée 22 et une courroie sans fin 24 sont logés entre le flasque 16 et le cadre 18. Le tendeur 20 est en forme de D et présente un plate à sa partie supérieure et à sa partie inférieure, est semi-circulaire d'un côté et droit de l'autre, et comporte un évidement (non représenté) dans lequel le ressort 26 peut être introduit. Le tendeur 20 présente également deux parties protubérantes 28 (dont une seule est représentée sur la Figure 2) qui se logent respectivement dans la découpe 30 du flasque intérieur 16 et dans une découpe correspondante du cadre extérieur 18. La découpe 30 peut être de forme ovale pour permettre l'alignement vertical approprié du tendeur 20. La découpe 30 doit être légèrement plus longue que la partie protubérante 28 de façon que celle-ci puisse coulisser horizontalement dans la découpe 30 sous la commande d'un ressort de façon à tendre la courroie 24. Le tendeur 20 présente également une gorge 32 à sa périphérie semi-circulaire qui reçoit et guide la côté intérieur de la courroie sans fin 24.

La roue crantée 22 est circulaire et présente des dents 34 à sa périphérie. Chaque côté de la roue crantée 22 présente également une lèvre circulaire 36 pouvant être engagée dans l'ouverture 38 ménagée dans le flasque intérieure 16 et dans le cadre extérieur 18 pour y tourner librement. La roue crantée présente aussi un trou central de forme carrée recevant un axe d'un forme correspondante qui est commandé par un moteur pas à pas pour l'entraîner en rotation.

La courroie sans fin 24 comprend une bande de polyimide non élastique tel que celui commercialisé sous la marque "Kapton" sur laquelle sont fixés des éléments d'entraînement à picots 42. Les éléments d'entraînement 42 comprennent un picot extérieur 44 de base cylindrique et à partie haute conique. Des éléments d'entraînement protubérants 46 sont disposés sur la surface intérieure de la courroie 24 et directement opposés aux picots d'entraînement portés par la surface extérieure de celle-ci. L'espacement entre les picots 44 et la forme des éléments d'entraînement 46 sont similaires à l'espacement et à la forme des dents 34 de la roue crantée 22 si bien que lorsque la roue crantée 22 est entraînée en rotation, elle entraîne en même temps la courroie 24. La forme des picots 44 portés par la courroie 24 est choisie de façon que le diamètre de la partie cylindrique du picot 44 soit légèrement inférieur à celui des perforations du milieu d'enregistrement entraîné dans la machine et leur espacement est égal à l'espacement des perforations du milieu d'enregistrement. Lorsque la courroie 24 est entraînée en rotation par la roue crantée 22, les picots 44 engrènent avec les perforations du milieu d'enregistrement lorsqu'ils débouchent au haut de la partie semi-circulaire du tendeur 20.

Le flasque intérieur 16 du boîtier 12 présente une surface intérieure 48 dans laquelle sont usinés deux évidements 50. De plus, la surface intérieure 48 présente une lèvre 52 à chacune de ses jonctions avec les parties avant 54 et arrière 56 du flasque intérieur 16. Les lèvres 52 offrent une surface portante plus large au milieu d'enregistrement lorsque celui-ci pénètre dans le dispositif d'alimentation 10 et le quitte.

La surface extérieure 88 du flasque intérieur 16 comporte une partie protubérante 58 contre une extrémité de laquelle est appliquée la partie verticale du tendeur 20 tandis que la roue crantée 22 est disposée dans une position adjacente à l'autre extrémité de la partie protubérante 58. La partie protubérante 58 est conçue pour correspondre à une partie protubérante similaire 90 du cadre extérieur 18 et y être fixée par les vis 60 et 62 traversant les tours 64 et 66, qui sont vissées dans des alésages filetés usinés dans le cadre extérieur 18. On notera que les trous 64 et 66 sont usinés au fond des évidements 50 de la surface intérieure 48 du flasque intérieur 16. Deux couronnes 70 et 72 sont disposées au débouché des trous 64 et 66 dans la partie protubérante 58 et sont conçues pour se loger dans des évidements correspondants du cadre extérieur 18. La partie protubérante 58 présente également une encoche 76 qui reçoit l'autre extrémité du ressort 26 lorsque le tendeur 20 est placé contre le flasque intérieur 16.

Le haut 78 de la partie protubérante 58 du flasque intérieur 16 présente une découpe longitudinale 80 qui, lorsque le flasque intérieur 16 est fixé au cadre extérieur 18, forme un canal dans lequel défilent les éléments 46 lorsque la courroie 24 est entraînée en rotation. La découpe 80 est alignée avec le canal 32 du tendeur 20 lorsque celui-ci est placé contre le flasque intérieur 16.

Le haut de la partie protubérante 58 est parallèle au haut du flasque intérieur 16 sur, approximativement, les trois premiers quarts de la longueur de la partie protubérante dans le sens du mouvement de la courroie 24. Cependant, lorsque les éléments d'entraînement 42 de la courroie 24 arrivent au voisinage de la roue crantée 22, il sont guidés sur un plan incliné ou ramps 82 orienté vers le bas suivant une pente de 2°, approximativement. La rampe 82 a pour fonction de permettre le retrait pratiquement vertical des picots des perforations du papier avant le dégagement de ceux-ci par la rotation de la courroie 24 autour de la roue crantée 22. Une rampe similaire 84 avec une pente de 10° est prévue sur le tendeur 20 pour permettre l'introduction pratiquement verticale des picots dans les perforations du papier. Les deux rampes 82 et 84 ont pour fonction d'éviter aux picots 44 d'endommager les perforations du milieu d'enregistrement qui est entraîné par le dispositif d'entraînement 10.

La surface intérieur 86 du cadre extérieur 18 fait face à la surface extérieure 88 de la paroi intérieure 16. Le cadre extérieur 18 présente également une partie protubérante 90 qui forme l'autre côté du canal formé avec la découpe 80. La partie protubérante 90 présente une rampe 92 similaire à la rampe 82.

La surface extérieure 94 du cadre extérieur 18 présente quatre alésages filetés 96 utilisés pour la fixation du collier 98 au cadre extérieur 18 par l'intermédiaire de deux vis 100 traversant les trous correspondants ménagés dans le collier 98 et vissés dans les alésages 96. Le collier 98 comporte également un bouton 102 assurant le serrage du dispositif d'entraînement 10 sur un axe (non représenté) introduit dans le collier 98 et le trou 104 ménagé dans le flasque intérieur 16. On notera que les vis 100 traversent les trous supérieurs du collier 98, ce qui permet à la partie inférieure du collier 98 de pouvoir être serrée vers la partie supérieure en tournant le bouton 102. Les quatre trous usinés dans le collier 98 et les quatre alésages filetés 96 usinés dans le cadre extérieur 18 permettent de tourner le collier 98 sur 180° de façon à pouvoir utiliser un dispositif d'entraînement gauche 10 tel que celui de la Figure 2 comme dispositif d'entraînement droit en installant la porte 14 de l'autre côté du cadre 18.

Les parties supérieure 106 et inférieure 108 du cadre extérieur 18 sont identiques comme le sont les montants constituant les parties avant 110 et arrière 112. La partie supérieure 106 du cadre extérieur 18 présente un gond 114 qui reçoit un axe de pivotement de la porte et un deuxième gond 116 ouvert qui permet un montage rapide du deuxième axe de pivotement de la porte. Le gond 114 présente un trou circulaire 118 dont le fond se trouve à une distance donnée au-dessus de la partie supérieure 106 du cadre 18. Le gond 116 permettant le montage rapide du deuxième axe de pivotement de la porte, est similaire au gond 114, à l'exception de sa partie supérieure qui est ouverte et le transforme ainsi en un palier semi-circulaire 120 qui permet le montage rapide d'un axe cylindrique. Des gonds 122 et 124 indentiques sont prévus sur la partie inférieur 108 du cadre 18 et assurent la même fonction pour un dispositif d'entraînement droit, la porte étant dans ce cas, montée dans les gonds 122 et 124.

Les parties avant 110 et arrière 112 du cadre 18 présentent des doigts 126 et 128 disposés perpendiculairement à la surface des parties 110 et 112, au droit des gonds 116 et 114, respectivement, et à égale distance des parties supérieure 106 et inférieure 108. Chacun des doigts 126 et 128 présente une gorge 130, 132 au voisinage de son extrémité, dans laquelle une extrémité des ressorts 134 et 136 est fixée.

La porte 14 est généralement de mêmes dimensions que l'ensemble formé par les parties supérieures du flasque 16 et du cadre 18 lorsque ces deux éléments sont assemblés pour loger le dispositif d'entraînement 10. La porte 14 présente une découpe 138 qui est alignées avec les éléments d'entraînement 42 lorsqu'elle est installée dans ses gonds 114 et 116.

La porte 14 présente également deux axes de pivotement 140 et 142. L'axe 140 doit être introduit dans le trou 118 du gond 114 et l'axe 142 engagé dans le palier du gond 116. La porte 14 peut ainsi pivoter autour de l'axe passant par le trou 118 et le palier 120. La porte 14 présente également deux doigts 144 et 146 similaires aux doigts 126 et 128 du cadre 18.

Les doigts 144 et 146 présentent des gorges 148 et 150 dans lesquelles est fixée l'autre extrémité des ressorts 134 et 136 lorsque la porte 14 est installée dans ses gonds 114 et 116. La porte 14 présente également des évidements 152 et 154 disposés de façon que lorsque la porte 14 est basculée en position ouverte, le bouton de serrage 102 porte contre le fond de l'un de ces évidements (154 dans le cas du montage montré ici, 152 si la porte 14 est montée dans les gonds 122 et 124 et que le collier 98 est basculé de 180° par rapport à son axe de symétrie). Grâce à la présence des évidements 152 et 154, lorsque la porte 14 est basculée en position ouverte, elle dépassé légèrement la verticale, et les ressorts 134 et 136 la maintiennent fermement en position ouverte contre la bouton 102.

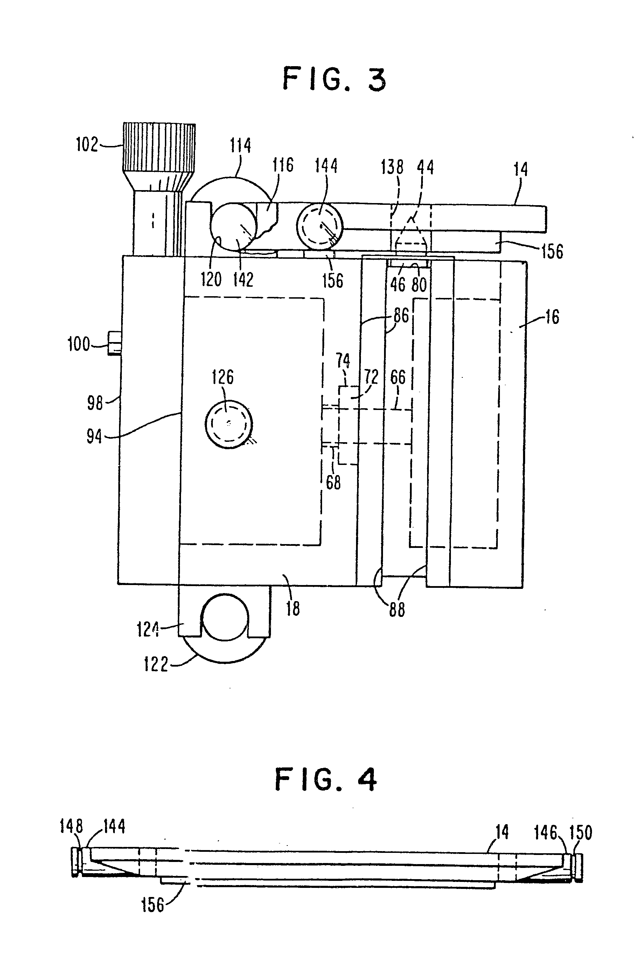

Lorsque la porte 14 est fermée, il est nécessaire que les ressorts 134 et 136 ne provoquent pas la mise en contact du fond de la porte 14 avec les surfaces supérieures du flasque intérieur 16 ou du cadre extérieur 18 sur lesquelles défile le milieu d'enregistrement. Une nervure 156 fait saillie de la surface inférieure de la porte 14 et son épaisseur est approximativement égale à la distance séparant la partie inférieure du trou 118 et de la portée 120 de la surface supérieure du cadre 18. Ainsi, lorsque la porte 14 est basculée en position basse ou fermée (Figure 3 et 5), le surface inférieure de celle-ci est maintenue dans une position parallèle à la partie 78 et à une distance de celle-ci égale à l'épaisseur de la nervure 156. La nervure 156 doit être disposée en dehors de la zone dans laquelle se trouve le milieu d'enregistrement d'une part, et, d'autre part, aussi éloignée que possible des axes de pivotement 140 et 142 pour réduire le moment dû au porte à faux de l'extrémité de la porte lorsque celle-ci est basculée en position de fermeture. D'autre part, le plan défini par les doigts 144, 146 et les doigts 126, 128, lorsque la porte est fermée, doit faire un angle aussi proche de 90° que possible avec le plan de la surface 106 de façon à réduire la valeur de la composante horizontale de la force de rappel exercée par les ressorts 134, 136. Les Figures 3 et 5 montrent comment la nervure 156 et les axes de pivotement 140 et 142 maintiennent la porte 14 au-dessus des surfaces supérieures de la paroi 16 et du cadre 18. La Figure 5 est une vue en coupe qui montre plus particulièrement comment le milieu d'enregistrement 158 défile sur la partie supérieure 78 par rapport à la nervure 156.

Tous les éléments décrits ici à l'exception de la courroie 54, du ressort 26 et des vis 60, 62 et 100 peuvent être fabriqués en polycarbonate garni de verre moulé d'une manière bien connue dans l'art antérieur. La courroie 24 peut être une courroie en "Kapton" à trous et les éléments d'entraînement 42 peuvent être en Nylon garni de verre moulé et fixés dans les trous de la courroie, moulés sur celle-ci ou fixés thermiquement ou par ultra-sons.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

**Revendications**

1. Dispositif d'entraînement d'un support en forme de bande comportant des perforations le long d'au moins un bord de la bande, du genre comprenant:

une courroie sans fin (24) à picots (42) pour coopérer avec les perforations de la bande sur au moins une première partie rectiligne,
des moyens d'entraînement rotatifs (22) pour entraîner ladite courroie sans fin,

un boîtier (12) de forme générale allongée dans la direction de ladite partie rectiligne, pour contenir ladite courroie et lesdits moyens d'entraînement rotatifs, comprenant au moins une première surface de support (106) pour supporter au moins le bord de ladite bande situé au-delà des perforations,
au moins une première ouverture allongée dans la direction de ladite partie rectiligne disposée dans ladite première surface du boîtier pour laisser l'extrémité des picots de ladite courroie dépasser de ladite première surface sur une certaine longueur et leur permettre d'entraîner ladite bande le long de ladite ouverture,
une porte (14) montée pivotante sur au moins un axe (140, 142) parallèle à ladite ouverture disposé sur ledit boîtier au-delà du bord perforé de ladite bande lorsqu'elle est en place dans le dispositif, la dimension transversale de ladite porte étant suffisante pour recouvrir le bord de la bande comportant les perforations,
des moyens de rappel (134, 136, 144, 146, 126, 128) et une butée (156) pour maintenir ladite porte dans une position fermée sensiblement parallèlement à ladite première surface à une faible distance de cette dernière, afin d'empêcher la bande s'écarter de son contact d'entraînement avec les picots, ladite butée étant disposée, lorsque la porte est fermée, entre l'axe de ladite porte et le bord de ladite bande,

essentiellement caractérisé en ce que:

ladite butée (156) est de forme allongée et s'étend sensiblement sur toute la longueur de ladite porte (14), l'axe général de la butée s'étendant parallelement à l'axe de pivotement, la distance entre les deux axes étant suffisante pour diminuer le moment dû au porte-à-faux de l'extrémité de la porte lorsque celle-ci est basculée en position fermée et qu'elle vient en butée contre une partie de ladite première surface de support (106), et
lesdits moyens de rappel sont conçus et montés de façon que la force de rappel qu'ils exercent sur la porte lorsque celle-ci est fermée prenne appui sur un axe se trouvant dans le prolongement de l'axe de la butée.

2. Dispositif selon la revendication 1, caractérisé en ce que lesdits moyens de rappel sont conçus et montés de façon que la force de rappel qu'ils exercent sur la porte lorsque celle-ci est fermée soit sensiblement perpendiculaire à ladite porte.

3. Dispositif selon la revendication 1 ou 2, caractérisé en ce que:

ladite butée (156) est constituée par une nervure longitudinale de ladite porte, et
le point d'appui de la force exercée par lesdits moyens de rappel sur ladite porte est disposé dans le prolongement de ladite nervure longitudinale.

4. Dispositif selon la revendication 1, 2, ou 3,
caractérisé en ce que:

lesdits moyens de rappel sont équilibrés et sont
constitués par une paire ressorts de traction
(134, 136) montés respectivement entre une
paire de doigts (144, 146) faisant saillie de
chaque côté des bords latéraux de ladite
porte et une paire de doigts (126, 128)
faisant saillie des montants latéraux (110,
112) dudit boîtier.

5. Dispositif selon l'une quelconque des
revendications précédentes, destiné à être
utilisé comme élément droite ou gauche
conjointement à un autre élément identique
pour entraîner un support en forme de bande
comportant des perforations sur les deux bords,
caractérisé en ce que:

ladite courroie sans fin comporte une seconde
partie rectiligne parallèle et opposée à la première,
ledit boîtier (12) comporte:
une second surface de support (108) parallèle
et opposée à la première,
une seconde ouverture allongée parallèle et
opposée à la première dans ladite seconde
surface pour laisser l'extrémité des picots de
ladite courroie dépasser de ladite seconde
surface sur une certaine longueur,
une première paire de gonds composée d'un
gond conventionnel (114) et un gond ouvert
(116) montés sur ladite première surface
pour recevoir les extrémités dudit axe (140,
142) lorsque ladite porte (14) est montée du
côté de ladite première surface, et
une seconde paire de gonds composée d'un
gond conventionnel (122) et d'un gond
ouvert (124), montés sur ladite seconde surface (108) pour recevoir les extrémités dudit
axe (140, 142) lorsque ladite porte (14) est
montée du côté de ladite seconde surface.

6. Dispositif selon la revendication 5, en tant
que rattachée à la revendication 4 caractérisé
en ce que lesdites paires de doigts (144, 146,
126, 128) sont agencés de façon que lesdits
ressorts (134, 136) puissent être montés entre
ladite porte et ledit boîtier quel que soit le côté
où la porte est montée et de telle façon que la
force qu'ils exercent sur la porte lorsque celle- ci
est fermée prenne appui sur le même axe que
celui de la butée.

7. Dispositif selon la revendication 6, en tant
que rattaché à la revendication 4 à travers la
revendication 5, caractérisé en ce que lesdits
doigts (126, 128) faisant saillie des montants
latéraux (110, 112) dudit boîtier sont disposés
à égale distance desdites première et seconde
surfaces de support (106, 108).

**Patentansprüche**

1. Vorschubvorrichtung fuer einen Traeger in
Lochbandform mit Loechern entlang zumindest
einer Bandkante, welche Vorschubvorrichtung
aufweist:

einen Riemen ohne Ende (24) mit Spitzkeilen
(42) zum Zusammenwirken mit den Loechern
in dem Band auf mindestens einem ersten
geradlinigen Teil,
drehbare Antriebsmittel (22) zum Antrieb des
Riemens ohne Ende,
ein Gehauese (12), dessen Form im wesentlichen in der Richtung des geradlinigen Teiles
verlaengert ist, zur Unterbringung des
Riemens und der drehbaren Antriebsmittel,
mit zumindest einer ersten Traegflaeche
(106), um zumindest die ueber die Loecher
hinaus liegende Kante zu tragen,
zumindest eine erste in der Richtung des
geradlinigen Teils verlaengerte Oeffnung in
der ersten Flaeche des Gehaueses, so dass
das Ende der Spitzkeilen des Riemens aus der
ersten Flaeche und entlang einer bestimmten Laenge sich erstrecken kann, und daher
die Spitzkeilen das Band entlang der Oeffnung antreibt,
eine verschwenkbar auf zumindest einer parallel
zu der Oeffnung liegenden Achse (140, 142)
innerhalb des Gehaeuses ueber die Bandkante mit Loechern hinaus angeordnete Tuer
(14), wenn das Band in der Vorrichtung eingesetzt ist, wobei die Querdimension der
Tuer ausreicht, um die Bandkante mit den
Loechern zu ueberlappen,
Ruecklaufmittel (134, 136, 144, 146, 126,
128) und ein Anschlag (156), um die Tuer in
einer geschlossenen zu der ersten Flaeche
etwa parallel liegenden und mit einem geringen Abstand hinsichtlich der letzteren entfernten Position zu halten, so dass das Band
verhindert wird, sich von seinem Antriebskontakt mit den Spitzkeilen zu entfernen,
wobei sich das Anschlag zwischen der Achse
der Tuer und der Bandkante befindet, wenn
die Tuer geschlossen ist,

im wesentlichen dadurch gekennzeichnet, dass:

das Anschlag (156) eine verlaengerte Form hat
und sich etwa entlang der ganzen Laenge der
Tuer (14) erstreckt, wobei die Hauptachse
des Anschlags parallel zu der Verschwenkungsachse verlaeuft, und der Teilungsabstand zwischen den beiden Achsen ausreicht, um das durch das ueberstehende Ende
der Tuer bedingte Moment zu verringern,
wenn die Tuer in der geschlossenen Position
verschwenkt ist, und gegen einen Teil der
ersten Traegflaeche (106) als Anschlag angehalten ist,
und die Ruecklaufmittel so ausgefuehrt und
angeordnet sind, dass die von den letzteren
gegen die geschlossene Tuer ausgeuebte Rueckstellkraft auf einer in der Verlaengerung der Anschlagachse liegenden Achse angewendet ist.

2. Vorrichtung nach Anspruch 1, dadurch gekennzeichnet, dass die Ruecklaufmittel so aufgefuehrt und angeordnet sind, dass die von den leitzteren gegen die geschlossene Tuer ausgeuebte Rueckstellkraft etwa senkrecht zu der Tuer ist.

3. Vorrichtung nach Anspruch 1 oder 2, dadurch gekennzeichnet, dass

der Anschlag (156) aus einer laenglichen Rippe der Tuer besteht, und

der Stuetzpunkt der von den Ruecklaufmitteln gegen die Tuer ausgeuebten Kraft in der Verlaengerung der laenglichen Rippe liegt.

4. Vorrichtung nach Anspruch 1, 2 oder 3, dadurch gekennzeichnet, dass die Ruecklaufmittel ausgeglichen sind und aus einem Paar von Zugfedern (134, 136) bestehen, die jeweils zwischen einem Paar von jenseits der Seitenkanten der Tuer vorspringenden Fingern (144, 146) und einem Paar von aus den Seitenpfosten des Gehaeuses (110, 112) vorspringenden Fingern (126, 128) angeordnet sind.

5. Vorrichtung nach einem der vorhergehenden Ansprueche zur Verwendung als rechtes oder linkes Element zusammen mit einem weiteren aehnlichen Element zum Antrieb eines Traegers in Lochbandform mit Loechern auf seinen beiden Kante, dadurch gekennzeichnet, dass

der Riemen ohne Ende einen zweiten rechtwinckligen hinsichtlich des ersten Teils parallel und entgegengesetzt angeordneten Teil aufweist:

das Gehaeuse (12) einschliesst:

— eine zweite hinsichtlich der ersten Traegflaeche parallel und entgegensetzt angeordnete Traegflaeche (108),
— eine zweite verlaengerte und hinsichtlich der ersten Oeffnung parallel und entgegengesetzt angeordnete Oeffnung in der zweiten Traegflaeche, so dass das Ende der Spitzkeilen des Riemens aus der zweiten Tragflaeche und entlang einer bestimmeten Laenge sich erstrecken kann,
— ein erstes Paar von Angeln mit einer ersten ueblichen Angel (114) und einer offenen Angel (116), welche auf der ersten Flaeche zur Aufnahme der Enden der Achse 140, 142) angeordnet sind, wenn die Tuer (14) seitens der ersten Flaeche angeordnet ist,
— ein zweites Paar von Angeln mit einer ersten ueblichen Angel (122) und einer offenen Angel (124), welche in der zweiten Flaeche (108) zur Aufnahme der Ende der Achse (140, 142) angeordnet sind, wenn die Tuer (14) seitens der zweiten Flaeche angeordnet ist.

6. Vorrichtung nach Anspruch 5 als Unteranspruch des Anspruchs 4, dadurch gekennzeichnet, dass die Paare von Fingern (144, 146, 126, 128), so ausgelegt sind, dass die Feder (134, 136) zwischen der Tuer und dem Gehaeuse, an welcher Seite immer auch die Tuer angeordnet sei, und in solcher Weise angebracht werden koennen, dass die von ihnen gegen die geschlossene Tuer ausgeuebte Kraft auf der gleichen Achse wie die Achse des Anschlags angewendet ist.

7. Vorrichtung nach Anspruch 6 als Unteranspruch des Anspruchs 4 ueber den Anspruch 5, dadurch gekennzeichnet, dass die aus den Seitenpfosten (110, 112) des Gehaeuses vorspringenden Fingern (126, 128) mit dem gleichen Teilungsabstand hinsichtlich der ersten und der zweiten Tragflaeche (106, 108) angeordnet sind.

**Claims**

1. A forms feed tractor mechanism for moving a record medium having perforations therein along at least an edge thereof, of the type comprising:

an endless belt (24) with feed pins (42) for engaging said perforations over at least a first linear portion,
Rotating drive means (22) for driving said endless belt,
a housing means (12) of a generally elongated shape along said linear portion for housing said endless belt and said rotating drive means, comprising at least a first bearing surface (106) for supporting at least the edge of said record medium situated beyond the perforations,
at least a first elongated opening orientated in the direction of said linear portion provided in said first bearing surface of the housing means to allow the tips of said endless belt feed pins to protrude from said first bearing surface by a certain amount and to drive said record medium along said opening,
a door means (14) pivotably mounted on at least a hinge pin (140, 142) parallel to said opening provided on said housing means beyond the perforated edge of said record medium when said medium is installed in the device, the transversal dimensions of said door being sufficient to extend over the perforated edge of said record medium,
biasing means (134, 136, 144, 146, 126, 128) and a stop (156) for maintaining said door in closed position substantially parallel and close to said first surface to prevent the record medium from moving away from its driving contact with the feed means, said stop being positioned when the door is closed, between the axis of said door and the edge of said record medium,

essentially characterized in that:

said stop (156) has an elongated shape and substantially extends over all the length of said door (14), the general axis of the stop being parallel to the hinge pins, the distance between the two axis being sufficient to reduce the movement induced by the cantilevered end of the door when said door is switched into closed position and comes bearing against a portion of said first bearing surface (106), and

said biasing means are designed and installed so that the biasing force they apply to the door in closed position, bears on an axis situated along an extension of the stop axis.

2. A mechanism according to claim 1 characterized in that said biasing means are designed and installed so that the biasing force they apply to the door in closed position, is substantially perpendicular to said door.

3. A mechanism according to claim 1 or 2 characterized in that:

said stop (156) is comprised of a longitudinal rib of said door, and

the bearing point of the force applied by said biasing means to said door, is situated over an extension of said longitudinal rib.

4. A mechanism according to claim 1, 2 or 3 characterized in that:

said biasing means are balanced and comprised of a pair of extension springs (134, 136) respectively mounted between a pair of pins (144, 146) protruding from each lateral edge of said door and a pair of pins (126, 128) protruding from lateral uprights (110, 112) of said housing.

5. A mechanism according to anyone of the above claims, to be used as a R.H. or L.H. element together with another identical element for driving a record medium having its both edges perforated, characterized in that:

said endless belt comprises a second linear portion parallel to and facing the first one, said housing means (12) comprises:

a second bearing surface (108) parallel to and facing the first one,

a second elongated opening parallel to and facing the first one in said second surface for allowing the tips of the endless belt feed pins to protrude from said second surface by a certain amount,

a first pair of hinge pin receivers comprising a conventional receiver (114) and an open receiver (116) mounted on said first surface for receiving the ends of said hinge pin (140, 142) when said door (14) is installed by the side of said first surface, and

a second pair of hinge pin receivers comprising a conventional receiver (122) and an open receiver (124) mounted on said second surface (108) for receiving the ends of said hinge pin (140, 142) when said door (14) is installed by the side of said second surface.

6. A mechanism according to claim 5 as depending on claim 4, characterized in that said pairs of pins (144, 146, 126, 128) are arranged so that said springs (134, 136) can be mounted between said door and said housing whatever the side by which the door is mounted, may be and so that the force they apply to the door in closed position, takes its bearing on the same axis as the one of the stop.

7. A mechanism according to claim 6 as depending on claim 4 through claim 5, characterized in that said pins (126, 128) protruding from lateral uprights (110, 112) of said housing, are provided at equal distance from said first and second bearing surfaces (106, 108).

# FIG. 1

# FIG. 5

# FIG. 2

# FIG. 3

# FIG. 4